(19) Europäisches Patentamt
European Patent Office
Office européen des brevets

(11) **EP 4 523 577 A1**

(12) **EUROPÄISCHE PATENTANMELDUNG**

(43) Veröffentlichungstag:
19.03.2025 Patentblatt 2025/12

(21) Anmeldenummer: 24199654.5

(22) Anmeldetag: 11.09.2024

(51) Internationale Patentklassifikation (IPC):
*A47J 31/46* (2006.01)　　　*A47J 31/52* (2006.01)

(52) Gemeinsame Patentklassifikation (CPC):
**A47J 31/52; A47J 31/468**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **15.09.2023 DE 102023125016**

(71) Anmelder: **Wilhelm Gronbach GmbH & Co. KG 6342 Niederndorf (AT)**

(72) Erfinder:
• HÖCK, Florian
83313 Siegsdorf (DE)
• MATHES, Anton
83364 Neukirchen (DE)

(74) Vertreter: **Hofstetter, Schurack & Partner Patent- und Rechtsanwaltskanzlei PartG mbB Balanstraße 73 / Haus 31A 81541 München (DE)**

(54) **VERFAHREN ZUM BETREIBEN EINES GETRÄNKEBEREITERS SOWIE GETRÄNKEBEREITER**

(57) Die Erfindung betrifft ein Verfahren zum Betreiben eines Getränkebereiters (10), bei welchem zum Zubereiten eines Getränks eine Pumpe (12) des Getränkebereiters (10) angesteuert und dadurch betrieben wird, wodurch mittels der Pumpe (12) Wasser zum Zubereiten des Getränks gefördert wird, wobei während des Zubereitens des Getränks an dem Getränkebereiter (10) eine elektrische Netzspannung anliegt, mittels welcher der Getränkebereiter (10) während des Zubereitens des Getränks betrieben wird, um mittels des Getränkebereiters (10) das Getränk zuzubereiten.

Fig.1

EP 4 523 577 A1

**Beschreibung**

Die vorliegende Erfindung betrifft ein Verfahren zum Betreiben eines Getränkebereiters gemäß dem Oberbegriff von Patentanspruch 1. Des Weiteren betrifft die Erfindung einen Getränkebereiter.

Getränkebereiter wie beispielsweise Heißgetränkebereiter, insbesondere Kaffeemaschinen, sind aus dem allgemeinen Stand der Technik bereits hinlänglich bekannt. Mittels des jeweiligen Getränkebereiters können Getränke, insbesondere Heißgetränke, zubereitet werden. Bei einem Verfahren zum Betreiben des jeweiligen Getränkebereiters wird zum Zubereiten des jeweiligen Getränks eine Pumpe angesteuert und dadurch betrieben, wodurch mittels der Pumpe Wasser zum Zubereiten des Getränks gefördert wird. Dabei liegt während des Zubereitens des Getränks an dem Getränkebereiter eine elektrische Netzspannung an, mittels welcher der Getränkebereiter während des Zubereitens des Getränks betrieben wird, um mittels des Getränkebereiters das Getränk zuzubereiten.

Aufgabe der vorliegenden Erfindung ist es, ein Verfahren zum Betreiben eines Getränkebereiters sowie einen solchen Getränkebereiter zu schaffen, sodass mittels des Getränkebereiters Getränke besonders vorteilhaft zubereitet werden können.

Diese Aufgabe wird erfindungsgemäß durch ein Verfahren mit den Merkmalen des Patentanspruchs 1 sowie durch einen Getränkebereiter mit den Merkmalen des Patentanspruchs 12 gelöst. Vorteilhafte Ausgestaltungen mit zweckmäßigen Weiterbildungen der Erfindung sind in den übrigen Ansprüchen angegeben.

Ein erster Aspekt der Erfindung betrifft ein Verfahren zum Betreiben eines Getränkebereiters. Der Getränkebereiter ist eine Vorrichtung, mittels welcher Getränke zubereitet werden können. Bei dem Verfahren wird zum Zubereiten des jeweiligen Getränks eine Pumpe des Getränkebereiters insbesondere mittels einer elektronischen Recheneinrichtung, insbesondere des Getränkebereiters, angesteuert, wodurch die Pumpe betrieben wird. Durch dieses Betreiben der Pumpe wird mittels der Pumpe Wasser zum Zubereiten des jeweiligen Getränks gefördert, wobei während des Zubereitens des Getränks an dem Getränkebereiter, insbesondere an der Pumpe, eine elektrische Netzspannung anliegt, mittels welcher der Getränkebereiter, insbesondere die Pumpe, während des Zubereitens des Getränks betrieben wird, um mittels der Getränkebereiters das Getränk zuzubereiten. Die elektrische Netzspannung ist eine elektrische Spannung, die von einer auch als Stromquelle bezeichneten, elektrischen Energiequelle wie beispielsweise einem Stromnetz bereitgestellt wird.

Um nun das jeweilige Getränk besonders vorteilhaft zubereiten zu können, ist es erfindungsgemäß vorgesehen, dass die Pumpe mittels einer Phasenanschnittsteuerung angesteuert wird, bei welcher wenigstens eine Spule der Pumpe zumindest mit Teilen von Sinushalbwellen einer elektrischen Wechselspannung, welche beispielsweise die Netzspannung ist oder aus der Netzspannung resultiert, derart versorgt wird, dass die Versorgung der Spule mit dem jeweiligen Teil der jeweiligen Sinushalbwelle bei einem jeweiligen Phasenanschnittwinkel der jeweiligen Sinushalbwelle beginnt und bei einem jeweiligen, unmittelbar auf den jeweiligen Phasenanschnittwinkel folgenden Nulldurchgang der jeweiligen Sinushalbwelle endet. Der Phasenanschnittwinkel wird auch als Einschaltwinkel bezeichnet. Unter dem Merkmal, dass der jeweilige Nulldurchgang der jeweiligen Sinushalbwelle unmittelbar auf den jeweiligen Phasenanschnittwinkel der jeweiligen Sinushalbwelle folgt, ist zu verstehen, dass zwischen dem jeweiligen Phasenanschnittwinkel der jeweiligen Sinushalbwelle und dem jeweiligen Nulldurchgang der jeweiligen Sinushalbwelle kein weiterer Nulldurchgang der jeweiligen Sinushalbwelle liegt.

Ganz insbesondere weist die Pumpe ein Förderelement auf, welches, insbesondere relativ zu einem Gehäuse der Pumpe und/oder translatorisch, ganz insbesondere rein translatorisch, bewegbar ist, um hierdurch das Wasser zu fördern. Durch Versorgen der Spule mit dem jeweiligen Teil der jeweiligen Sinushalbwelle wird beispielsweise die Spule mit einem jeweiligen korrespondierenden Teil einer jeweiligen korrespondierenden Sinushalbwelle eines jeweiligen elektrischen Stroms versorgt. Somit wird durch Versorgen der Spule mit dem jeweiligen Teil der jeweiligen Sinushalbwelle der elektrischen Wechselspannung mittels der Spule das Förderelement insbesondere relativ zu dem Gehäuse bewegt, wodurch das Wasser zu fördern ist oder gefördert wird. Beispielsweise stellt die Spule infolge der Versorgung der Spule mit dem jeweiligen Teil der jeweiligen Sinushalbwelle ein Magnetfeld bereit, mittels welchem das Förderelement insbesondere relativ zu dem Gehäuse bewegt wird, um hierdurch das Wasser zu fördern. Beispielsweise liegt zwischen jeweils zwei unmittelbar aufeinanderfolgenden Sinushalbwellen der Wechselspannung eine Ruhephase, während welcher eine Versorgung der Spule mit der elektrischen Spannung, insbesondere durchgehend und somit unterbrechungsfrei, unterbleibt. Somit wird beispielsweise durch Versorgen der Spule mit dem jeweiligen Teil der jeweiligen Sinushalbwelle mittels der Spule das Förderelement insbesondere relativ zu dem Gehäuse in eine erste Bewegungsrichtung bewegt, wodurch beispielsweise ein Federelement gespannt wird. Da nach dem jeweiligen Nulldurchgang der jeweiligen Sinushalbwelle, mit welcher die Spule versorgt wird oder wurde, die jeweilige Ruhephase folgt, kann sich während der Ruhephase und somit nach dem jeweiligen Nulldurchgang der jeweiligen Sinushalbwelle das Federelement entspannen, wodurch mittels des Federelements beispielsweise das Förderelement, insbesondere relativ zu dem Gehäuse, in eine der ersten Bewegungsrichtung entgegengesetzte, zweite Bewegungsrichtung bewegt. Das Förderelement begrenzt beispielsweise eine Förderkammer zumindest teilweise und vorzugsweise direkt. Durch Bewegen des Förderelements in die erste Bewegungsrichtung wird beispielsweise mittels des Förderelements das Wasser in die Förderkammer hineingefördert, insbesondere hineingesaugt. Beispielsweise geht mit einer insbesondere relativ zu dem Gehäuse erfolgenden Bewegung des Förderelements in die erste Bewegungsrichtung eine Vergrößerung der Förderkammer einher. Wird insbesondere mittels des Federelements das Förderelement insbesondere relativ zu dem Gehäuse in die zweite Bewegungsrichtung bewegt, so wird hierdurch mittels des Förderelements das Wasser aus der Förderkammer herausgefördert, um hierdurch das Getränk zuzubereiten. Beispielsweise geht mit der jeweiligen, insbesondere relativ zu dem Gehäuse erfolgenden, Bewegung des Förderelements in die zweite Bewegungsrichtung eine Volumenverkleinerung der Förderkammer einher. Da somit die Spule mit den Teilen der Sinushalbwellen versorgt wird, und da zwischen jeweils zwei unmittelbar aufeinanderfolgenden Sinushalbwellen beziehungsweise benachbarten Sinushalbwellen die insbesondere genau eine jeweilige Ruhephase liegt, sodass die Ruhephasen und die Sinushalbwellen abwechselnd aufeinanderfolgen, wird das Förderelement abwechselnd in die erste Bewegungsrichtung und in die zweite Bewegungsrichtung bewegt, wodurch abwechselnd das Wasser in die Förderkammer hineingefördert und aus der Förderkammer herausgefördert wird. Hierdurch wird das Wasser zum Zubereiten des Getränks gefördert.

Bei dem erfindungsgemäßen Verfahren werden während des Zubereitens des Getränks die Phasenanschnittwinkel derart eingestellt, das heißt gewählt, insbesondere variiert, dass ein von den eingestellten Phasenanschnittwinkeln abhängendes Integral einer Funktion, welche von einem zeitlichen Verlauf der während des Zubereitens des Getränks an dem Getränkebereiter anliegenden elektrischen Netzspannung abhängt oder den zeitlichen Verlauf der während des Zubereitens des Getränks an dem Getränkebereiter anliegenden elektrischen Netzspannung beschreibt, während des Zubereitens des Getränks konstant ist, wobei das Integral derart von den Phasenanschnittwinkeln abhängt, dass das Integral bei dem jeweiligen Phasenanschnittwinkel beginnt, das heißt dass der jeweilige eingestellte Phasenanschnittwinkel ein jeweiliger Anfang des Integrals ist, das heißt insbesondere bei einer jeweiligen Berechnung des Integrals als ein jeweiliger Anfang des Integrals verwendet wird.

Mit anderen Worten werden während des Zubereitens des Getränks die Phasenanschnittwinkel derart eingestellt, das heißt gewählt, insbesondere variiert, dass, insbesondere alle, Werte von von den eingestellten Phasenanschnittwinkeln abhängenden Integralen der gleichen, von einem zeitlichen Verlauf der während des Zubereitens des Getränks an dem Getränkebereiter anliegenden elektrischen Netzspannung abhängenden oder den zeitlichen Verlauf der während des Zubereitens des Getränks an dem Getränkebereiter anliegenden elektrischen Netzspannung beschreibenden Funktion während des Zubereitens des Getränks gleich sind. Die Integrale hängen derart von den Phasenanschnittwinkeln ab, dass dem jeweiligen Phasenanschnittwinkel genau ein jeweiliges der Integrale derart zugeordnet ist, dass der Phasenanschnittwinkel ein jeweiliger Anfang des dem jeweiligen Phasenanschnittwinkel zugeordneten Integrals ist, wobei insbesondere der jeweilige, unmittelbar auf den jeweiligen Phasenanschnittwinkel folgende Nulldurchgang der jeweiligen Sinushalbwelle ein jeweiliges Ende des dem jeweiligen Phasenanschnittwinkel zugeordneten Integrals ist.

Wieder mit anderen Worten ausgedrückt werden während des Zubereitens des Getränks die Phasenanschnittwinkel derart eingestellt, insbesondere variiert, dass das Integral der Funktion konstant bleibt, insbesondere mit der Maßgabe, dass das Integral der Funktion für die, insbesondere alle, Sinushalbwellen, mit deren Teilen die Spule versorgt wird, berechnet oder betrachtet wird, derart, dass das Integral bei dem jeweiligen Phasenanschnittwinkel beginnt und bei dem jeweiligen, unmittelbar auf den jeweiligen Phasenanschnittwinkel folgenden Nulldurchgang der jeweiligen Sinushalbwelle endet. Wird also beispielsweise das Integral für den jeweiligen, insbesondere für jeden, eingestellten Phasenanschnittswinkel berechnet, derart, dass der jeweilige Phasenanschnittswinkel als ein jeweiliger Anfang des Integrals verwendet wird und dass der jeweilige, unmittelbar auf den jeweiligen Phasenanschnittswinkel der jeweiligen Sinushalbwelle folgende Nulldurchgang der jeweiligen Sinushalbwelle als ein jeweiliges Ende des Integrals verwendet wird, so ist das Integral während des Zubereitens des Getränks konstant, das heißt so sind die, insbesondere alle, oben genannten, durch das für den jeweiligen Phasenanschnittwinkel und den jeweiligen, unmittelbar darauffolgenden Nulldurchgang der jeweiligen Sinushalbwelle erfolgende Berechnen des Integrals berechneten Werte gleich.

Ist beispielsweise die zuvor genannte Funktion u(t), wobei mit u die an dem Getränkebereiter während der Zubereitung anliegende elektrische Wechselspannung, insbesondere die Netzspannung, bezeichnet ist, und wobei mit t die Zeit bezeichnet ist, sodass beispielsweise die Funktion der zeitliche Verlauf der elektrischen Wechselspannung ist oder den zeitlichen Verlauf der elektrischen Wechselspannung beschreibt, so ist beispielsweise das jeweilige Integral, eine jeweilige Fläche unter dem jeweiligen Teil der jeweiligen Sinushalbwelle, wobei sich die jeweilige Fläche von dem jeweiligen Anfang, das heißt von dem jeweiligen Phasenanschnittwinkel, dem das jeweilige Integral zugeordnet ist, insbesondere durchgängig bis zu dem jeweiligen, unmittelbar auf den jeweiligen Phasenanschnittwinkel folgenden Nulldurchgang der jeweiligen Sinushalbwelle erstreckt. Bei diesem Beispiel werden die, insbesondere alle, Phasenanschnittwinkel derart eingestellt, dass die, insbesondere alle, Flächen während des Zubereitens des Getränks gleich sind, mithin dass das Integral während des Zubereitens des Getränks konstant ist beziehungsweise bleibt. Hierdurch kann das jeweilige Getränk, insbesondere jedes Mal, wenn es zubereitet wird, besonders vorteilhaft zubereitet werden, da beispielsweise wenigstens eine Größe, die das Zubereiten des Getränks beschreibt oder beeinflusst, konstant gehalten werden kann. Der Erfindung liegen insbesondere folgende Erkenntnisse und Überlegungen zugrunde: Die Verwendung von Schwingkolbenpumpen zur Wasserförderung ist insofern vorteilhaft, als Schwingkolbenpumpen in großer Stückzahl zur Verfügung stehen und damit kostengünstig beschafft werden können. Außerdem weisen Schwingkolbenpumpen eine hinreichende Qualität in Bezug auf eine stabile Förderleistung und geringe Ausfallraten auf.

Schwingkolbenpumpen arbeiten nach dem Prinzip einer Verdrängerpumpe. Durch die Bewegung des beispielsweise als Kolben ausgebildeten Förderelements insbesondere in einer Pumpenkammer, beispielsweise mit einem Einlassventil und einem Auslassventil, kann ein pulsierender Fluss des Wassers erzeugt werden. Hierunter ist beispielsweise zu verstehen, dass dann, wenn das Förderelement in die erste Bewegungsrichtung bewegt wird, das Wasser insbesondere über das Einlassventil in die Förderkammer, welche beispielsweise die so genannte Pumpenkammer ist, hineingefördert wird. Wird das Förderelement in die zweite Bewegungsrichtung bewegt, so wird hierdurch das Wasser, insbesondere über das Auslassventil, aus der Förderkammer herausgefördert. Die Bewegung des Förderelements insbesondere in die erste Bewegungsrichtung wird durch eine auf das Förderelement wirkende magnetische Kraft erzeugt, die mittels eines Elektromagneten der Schwingkolbenpumpe erzeugt wird, wobei der Elektromagnet die genannte Spule aufweist. Insbesondere umgibt der Elektromagnet, insbesondere die Spule, zumindest einen Teil des Förderelements. Stellt der Elektromagnet beziehungsweise die Pumpe die magnetische Kraft bereit, und wirkt die magnetische Kraft auf das Förderelement, so wird das Förderelement hierdurch in die erste Bewegungsrichtung, insbesondere relativ zu dem Gehäuse, bewegt und dabei insbesondere aus der Pumpenkammer gezogen, wodurch ein Volumen der Pumpenkammer beziehungsweise der Förderkammer vergrößert wird. Hierdurch wird das Wasser in die Pumpkammer hineingefördert, insbesondere hineingesaugt. Das Hineinfördern des Wassers in die Pumpenkammer ist ein Ansaugzyklus oder ein Teil eines Ansaugzyklus. Bei dem Bewegen des Förderelements in die erste Bewegungsrichtung wird gleichzeitig das zuvor genannte, einfach auch als Feder bezeichnete Federelement gespannt, wodurch in dem Federelement Energie für einen auf den Ansaugzyklus folgenden Pumpzyklus gespeichert wird. Wird der Elektromagnet beziehungsweise die Spule nicht mehr mit der elektrischen Wechselspannung versorgt und somit deaktiviert, so stellt der Elektromagnet die magnetische Kraft nicht mehr bereit, und die Feder kann sich zumindest teilweise entspannen und hierdurch das Förderelement in die zweite Bewegungsrichtung, insbesondere relativ zu dem Gehäuse, bewegen, insbesondere drücken, wodurch das Wasser, insbesondere in eine Förderrichtung, aus der Pumpenkammer herausgefördert, insbesondere herausgedrückt, wird. Dieses Herausfördern des Wassers aus der Pumpenkammer ist der so genannte Pumpzyklus oder ein Teil des Pumpzyklus.

Insbesondere ist unter der Ansteuerung der Pumpe eine Ansteuerung der Spule beziehungsweise des Elektromagneten zu verstehen, sodass beispielsweise die Pumpe, die Spule beziehungsweise der Elektromagnet mittels der Phasenanschnittsteuerung angesteuert wird. Die Versorgung der Pumpe, insbesondere des Elektromagneten beziehungsweise der Spule, mit den jeweiligen Teilen der Sinushalbwellen derart, dass zwischen zwei jeweiligen benachbarten Sinushalbwellen die jeweilige Ruhephase liegt, erfolgt unter Verwendung der elektrischen Wechselspannung und beispielsweise einer einfachen Dioden-Gleichrichtung. Dies bedeutet beispielsweise, dass nur jede zweite, einfach auch als Halbwelle bezeichnete Sinushalbwelle der elektrischen Wechselspannung zu der Pumpe, insbesondere zu dem Elektromagneten beziehungsweise der Spule, durchgelassen wird, wobei unter den zuvor genannten Sinushalbwellen, mit deren Teilen die Spule der Pumpe versorgt wird, die Sinushalbwellen zu verstehen sind, die zu der Spule durchgelassen werden. Durch dieses Wirkprinzip hängt eine Förderleistung der Pumpe direkt mit der in der Feder gespeicherten Energie zusammen.

Da die elektrische Wechselspannung verwendet wird, um den Getränkebereiter, insbesondere die Pumpe, zu betreiben, wird die elektrische Wechselspannung auch als Versorgungsspannung bezeichnet. Um nun etwaige Schwankungen der Versorgungsspannung zu kompensieren, wird bei einer mechanischen Auslegung der Pumpe üblicherweise darauf geachtet, dass auch bei einer Unterspannung das Förderelement in oder an seine maximale Endlage bewegt, insbesondere zurückgezogen, wird, also die Feder maximal gespannt wird. Damit lässt sich eine zumindest im Wesentlichen konstante, auch als Pumpleistung bezeichnete, Förderleistung der Pumpe auch über einen größeren Spannungsbereich gewährleisten. Soll nun die Pumpleistung beeinflusst, das heißt eine Pumpenkennlinie der Pumpe manipuliert werden, so gibt es hierfür zwei Methoden:

- Es wird eine Schwingungspaketsteuerung genutzt, bei oder in welcher nur bestimmte Netzhalbwellenpaare zu der Pumpe durchgelassen werden, wodurch eine Steigung der Pumpenkennlinie beeinflusst wird. Bei dieser Art der Ansteuerung bleibt der maximale Förderdruck erhalten.
- Es wird die Phasenanschnittsteuerung verwendet, bei der die Spule erst ab dem jeweiligen Phasenanschnittwinkel und, insbesondere durchgängig, bis zu dem jeweiligen, unmittelbar auf den jeweiligen Phasenanschnittwinkel folgenden Nulldurchgang der jeweiligen Sinushalbwelle bestromt wird, dadurch, dass die Spule ab dem jeweiligen Phasenanschnittwinkel, insbesondere durchgängig, bis zu dem jeweiligen, auf den jeweiligen Phasenanschnittwinkel unmittelbar folgenden Nulldurchgang der jeweiligen Sinushalbwelle mit der elektrischen Wechselspannung versorgt wird. Damit kann man eine Parallelverschiebung der Pumpenkennlinie erreichen. Insbesondere ist oder charakterisiert die Pumpenkennlinie eine auch als Wasserfluss bezeichnete Strömung des Wassers als Funktion eines der Strömung entgegenstehenden Gegendrucks.

Üblicherweise sind Schwingkolbenpumpen für einen direkten Anschluss an die Netzspannung ausgelegt und arbeiten aufgrund ihrer mechanischen Auslegung sehr stabil auch bei schwankenden Netzspannungen, mithin auch bei Schwankungen der Netzspannung. Erfolgt die Ansteuerung der Schwingkolbenpumpe mit einer Phasenanschnittsteuerung - um die Pumpenkennlinie zu beeinflussen - kann jedoch die Unempfindlichkeit der Schwingkolbenpumpe gegenüber Schwankungen der Netzspannung ausgehebelt werden. Ein Grund hierfür ist, dass dann bei Schwankungen der Netzspannung die Feder nicht mehr vollständig sondern nur teilweise gespannt wird, also das Förderelement nicht mehr in seine maximale Endlage gebracht wird. Eine Energie für das Spannen des Federelements kann beispielsweise als Proportional zu einem Integral der Netzspannung angesehen werden. Erkennbar ist dann, dass die Energie der Feder und damit die Pumpleistung abhängig von der Netzspannung ist. Dies bedeutet, dass aus konstant gehaltenen Phasenanschnittwinkeln bei unterschiedlichen Netzspannungen oder Schwankungen der Netzspannung unterschiedliche Pumpleistungen verursachen können.

Das erfindungsgemäß Verfahren ermöglicht es nun die zuvor genannte Größe, welche beispielsweise die zuvor genannte auch als Durchfluss oder Wasserfluss bezeichnete Strömung des Wassers oder ein mittels der Pumpe bewirkbarer Förderdruck des Wassers ist, konstant zu halten, insbesondere auch dann, wenn die elektrische Wechselspannung schwankt. Herkömmlicherweise ist es gegebenenfalls möglich, bei Abweichungen der elektrischen Wechselspannung von einer Bezugsspannung durch einen Regelkreis einer Regelung diese Abweichung dann automatisch auszugleichen. Zu Problemen kann es aber kommen, wenn es zu sehr schnellen Schwankungen der elektrischen Wechselspannung kommt. Die Erfindung ermöglicht es, auch schnelle Schwankungen der elektrischen Wechselspannung, insbesondere der Netzspannung, zu kompensieren und hierdurch während des Zubereitens die Größe konstant zu halten. Insbesondere ermöglicht es die Erfindung, bei einer statischen Abweichung der elektrischen Wechselspannung von einer Bezugsspannung sowie bei schnell wechselnden Schwankungen der elektrischen Wechselspannung die Größe konstant zu halten, wodurch das Getränk besonders vorteilhaft und zudem mit einer gleichbleibenden Qualität zubereitet werden kann.

Um das Getränk besonders vorteilhaft zubereiten zu können, ist es bei einer Ausführungsform der Erfindung vorgesehen, dass die Pumpe während des Zubereitens des Getränks mittels einer auch als Pumpregelung bezeichneten Regelung betrieben und dadurch geregelt betrieben wird. Wenn im Folgenden die Rede von der Regelung ist, so ist darunter, falls nichts anderes angegeben ist, die Pumpregelung zu verstehen. Dabei umfasst das Einstellen der Phasenanschnittwinkel, dass die Regelung während des Zubereitens Soll-Werte für die, insbesondere alle, Phasenanschnittwinkel bereitstellt. Dabei ist es denkbar, dass sich wenigstens zwei der Soll-Werte voneinander unterscheiden. Insbesondere ist es denkbar, dass sich mehr als zwei der Soll-Werte voneinander unterscheiden. Dabei umfasst das Einstellen der Phasenanschnittwinkel auch, dass zu dem jeweiligen Soll-Wert, insbesondere zu jedem Soll-Wert, das heißt für den jeweiligen Soll-Wert, insbesondere für jeden Soll-Wert, insbesondere genau ein jeweiliger Ist-Wert für den jeweiligen Phasenanschnittwinkel erzeugt, insbesondere berechnet, wird, insbesondere mittels der elektronischen Recheneinrichtung. Ganz insbesondere ist es vorgesehen, dass die Phasenanschnittsteuerung mittels der elektronischen Recheneinrichtung durchgeführt wird. Ferner ist es vorzugsweise vorgesehen, dass die Phasenanschnittwinkel mittels der elektronischen Recheneinrichtung eingestellt, insbesondere variiert, werden. Insbesondere mittels der elektronischen Recheneinrichtung werden die Ist-Werte und dadurch die Phasenanschnittwinkel eingestellt. Dabei werden die Ist-Werte insbesondere mittels der elektronischen Recheneinrichtung derart erzeugt, dass sich zumindest einer der Ist-Werte von dem korrespondierenden Soll-Wert, zu welchem, das heißt für welchen der zumindest eine Ist-Wert erzeugt wurde, unterscheidet. Dies bedeutet, dass der mit dem zumindest einem Ist-Wert korrespondierende Soll-Wert zu welchem der zumindest eine Ist-Wert erzeugt wurde, zu dem zumindest einen Ist-Wert korrigiert wird. Die Ist-Werte werden dabei derart erzeugt, dass durch Einstellen der Ist-Werte und dadurch der Phasenanschnittwinkel die Werte der Integrale während des Zubereitens des Getränks gleich sind, mithin das Integral konstant gehalten wird. Nicht notwendigerweise werden alle Soll-Werte in die korrespondierenden Ist-Werte geändert, insbesondere ist es denkbar, dass wenigstens einer der Ist-Werte mit dem korrespondierenden Soll-Wert übereinstimmt, sodass beispielsweise wenigstens einer der Soll-Werte einfach beziehungsweise unverändert durchgeschleift und als der korrespondierende Ist-Wert verwendet wird.

Es ist erkennbar, dass aus den Soll-Werten die Ist-Werte erzeugt werden. Die Ist-Werte werden beispielsweise derart erzeugt, dass sich jeder Ist-Wert von dem korrespondierenden Soll-Wert, zu welchem der jeweilige Ist-Wert erzeugt wurde, unterscheidet. Ferner ist es denkbar, dass sich nur einige der Ist-Werte oder gar nur einer der Ist-Werte von den jeweiligen korrespondierenden Soll-Werten beziehungsweise von dem korrespondierenden Soll-Wert unterscheiden oder unterscheidet. Zusammengefasst ausgedrückt und beispielsweise bezogen auf eine Möglichkeit, bei der nicht alle aber mehrere oder aber alle Ist-Werte sich von den korrespondierenden Soll-Werten, zu dem die Ist-Werte erzeugt wurden, unterscheiden, werden die von der Regelung bereitgestellten und somit beispielsweise vorgegebenen Soll-Werte in die davon unterschiedlichen Ist-Werte geändert und somit kompensiert, um hierdurch das Integral der Funktion während des Zubereitens konstant zu halten. Hierdurch können Schwankungen der elektrischen Wechselspannung vorteilhaft kompensiert werden, sodass beispielsweise die zuvor genannte Größe zumindest im Wesentlichen konstant gehalten werden kann. Dadurch können übermäßige Schwankungen sowohl innerhalb der Zubereitung des Getränks als auch von Zubereitung zu Zubereitung vermieden werden, sodass das Getränk besonders vorteilhaft zubereitet werden kann.

Um das Getränk besonders vorteilhaft zubereiten zu können, ist es in weiterer Ausgestaltung der Erfindung vorgesehen, dass die Regelung eine Messgröße als Regelgröße verwendet, wobei die Messgröße mittels wenigstens eines Sensors des Getränkebereiters gemessen wird. Ganz insbesondere handelt es sich bei der Messgröße um die zuvor genannte Größe. Das Verfahren ermöglicht es insbesondere, die Messgröße zumindest im Wesentlichen konstant zu halten, wodurch das Getränk besonders vorteilhaft zubereitet werden kann.

Eine weitere Ausführungsform zeichnet sich dadurch aus, dass die Messgröße ein mittels der Pumpe bewirkter Druck des geförderten Wassers oder eine mittels der Pumpe bewirkte, einfach auch als Durchfluss bezeichnete Durchflussmenge des geförderten Wassers ist. Ganz insbesondere ist die Durchflussmenge beziehungsweise der Durchfluss ein Volumenstrom oder ein Massenstrom des Wassers. Vorzugsweise handelt es sich bei dem zuvor genannten Druck um den Förderdruck.

Um das Getränk besonders vorteilhaft zubereiten zu können, ist es in weiterer Ausgestaltung der Erfindung vorgesehen, dass während des Zubereitens des Getränks für den jeweiligen eingestellten Phasenanschnittwinkel das Integral insbesondere mittels der elektronischen Recheneinrichtung berechnet wird. Mit andere Worten ist es vorzugsweise vorgesehen, dass die Werte der Integrale insbesondere mittels der elektronischen Recheneinrichtung berechnet werden. Hierdurch können die Phasenanschnittwinkel besonders vorteilhaft derart eingestellt werden, dass das Integral konstant gehalten wird, mithin dass die Werte gleich sind.

Bei einer weiteren, besonders vorteilhaften Ausführungsform der Erfindung ist es vorgesehen, dass der jeweilige Wert des jeweiligen Integrals ein jeweiliger Flächeninhalt einer jeweiligen Fläche ist, die unter dem jeweiligen Teil der jeweiligen Sinushalbwelle und zwischen dem jeweiligen Phasenanschnittwinkel und dem jeweiligen, unmittelbar auf den jeweiligen Phasenanschnittwinkel folgenden Nulldurchgang der jeweiligen Sinushalbwelle liegt. Hierdurch kann das Getränk besonders vorteilhaft zubereitet werden, da Schwankungen der elektrischen Wechselspannung kompensiert werden können.

Um das Getränk auf besonders einfache Weise besonders vorteilhaft zubereiten zu können, ist es bei einer weiteren Ausführungsform der Erfindung vorgesehen, dass ein jeweiliger, insbesondere zeitlich vor dem jeweiligen Phasenanschnittwinkel der jeweiligen Sinushalbwelle liegender zweiter Teil der jeweiligen Sinushalbwelle mittels eines Spannungssensors des Getränkebereiters gemessen wird, wobei zum Einstellen, insbesondere variieren, der Phasenanschnittwinkel der jeweilige, auf den jeweiligen zweiten Teil der jeweiligen Sinushalbwelle folgende Phasenanschnittwinkel der jeweiligen Sinushalbwelle in Abhängigkeit von dem Messen des jeweiligen, vor dem jeweiligen Phasenanschnittwinkel der jeweiligen Sinushalbwelle liegenden zweiten Teil der jeweiligen Sinushalbwelle eingestellt, das heißt gewählt oder festgelegt wird. Durch diese Ausführungsform können beispielsweise Ereignisse, die von dem jeweiligen Phasenanschnittwinkel nicht bekannt sind, jedoch vor dem jeweiligen Phasenanschnittwinkel auftreten und somit zu Schwankungen der elektrischen Wechselspannung führen können, gemessen werden, indem der jeweilige zweite Teil mittels des Spannungssensors gemessen wird. Somit können auch von unbekannten Ereignissen verursachte Schwankungen der elektrischen Wechselspannung vorteilhaft kompensiert werden, wodurch das Getränk besonders vorteilhaft zubereitet werden kann. Mit anderen Worten ermöglicht es diese Ausführungsform, Schwankungen auch ohne ein Wissen über Schwankungen der elektrischen Wechselspannung verursachende Ereignisse kompensiert werden. Hierdurch ist es von Vorteil, wenn der jeweilige Phasenanschnittwinkel hinreichend weit hinter einem jeweiligen, zweiten Nulldurchgang der jeweiligen Sinushalbwelle liegt. Hierunter ist insbesondere folgendes zu verstehen: Der jeweilige, unmittelbar auf den jeweiligen Phasenanschnittwinkel folgende Nulldurchgang der jeweiligen Sinushalbwelle wird auch als erster Nulldurchgang der jeweiligen Sinushalbwelle bezeichnet. Die jeweilige Sinushalbwelle erstreckt sich dabei von dem jeweiligen, zweiten Nulldurchgang bis zu dem jeweiligen, ersten Nulldurchgang der jeweiligen Sinushalbwelle, sodass der jeweilige Phasenanschnittwinkel unmittelbar auf den jeweiligen, zweiten Nulldurchgang der jeweiligen Sinushalbwelle folgt. Dies bedeutet, dass zwischen dem jeweiligen, zweiten Nulldurchgang der jeweiligen Sinushalbwelle und dem jeweiligen Phasenanschnittwinkel kein weiterer, anderer Nulldurchgang der jeweiligen Sinushalbwelle erfolgt. Insbesondere liegt der jeweilige Phasenanschnittwinkel zwischen dem jeweiligen, ersten Nulldurchgang und dem jeweiligen, zweiten Nulldurchgang der jeweiligen Sinushalbwelle, sodass vorzugsweise der jeweilige Phasenanschnittwinkel sowohl von dem jeweiligen, zweiten Nulldurchgang der jeweiligen Sinushalbwelle als auch von dem jeweiligen, ersten Nulldurchgang der jeweiligen Sinushalbwelle beabstandet ist. Bei der zuvor beschriebenen Ausführungsform ist es nun vorgesehen, den jeweiligen sich insbesondere durchgängig von dem jeweiligen, zweiten Nulldurchgang bis zu dem jeweiligen Phasenanschnittwinkel zumindest teilweise zu messen, wodurch auf eine etwaige Schwankung der elektrischen Wechselspannung rückgeschlossen werden kann, sodass in der Folge der jeweilige Phasenanschnittwinkel derart eingestellt, insbesondere variiert, werden kann, dass die Schwankung kompensiert werden kann. Von Vorteil hierbei ist somit, dass der jeweilige Phasenanschnittwinkel ausreichend weit hinter dem jeweiligen, zweiten Nulldurchgang der jeweiligen Sinushalbwelle liegt, um zwischen dem jeweiligen, zweiten Nulldurchgang der jeweiligen Sinushalbwelle und dem jeweiligen Phasenanschnittwinkel, mithin dem Versorgen der Pumpe beziehungsweise der Spule mit der elektrischen Wechselspannung ausreichend Zeit zu haben, um durch Messen des jeweiligen zweiten Teils die zu erwartende elektrische Wechselspannung in der aktuellen Sinushalbwelle zu messen. Sobald dies geschehen ist, kann der jeweilige Phasenanschnittwinkel eingestellt werden, derart, dass das Integral konstant ist beziehungsweise bleibt. Vorteil dieser Ausführungsform ist, dass auch unbekannte und beispielsweise von dem Stromnetz kommende Störungen, also Störungen, die nicht durch den Getränkebereiter selbst erzeugt werden und somit unbekannt sind, kompensiert werden können.

Um etwaige Schwankungen der elektrischen Wechselspannung besonders vorteilhaft kompensieren zu können, ist es in weiterer Ausgestaltung der Erfindung vorgesehen, dass wenigstens ein zum Regeln wenigstens eines zusätzlich zu der Pumpe vorgesehenen und elektrisch betreibbaren, auch als elektrischer Verbraucher bezeichnetes Gerät des Getränkebereiters vorgesehener Regler des Getränkebereiters oder eine zum Steuern des zusätzlich zu der Pumpe vorgesehenen Geräts vorgesehene Steuerung des Getränkebereiters eine Information bereitstellt, die einen innerhalb wenigstens einer der Sinushalbwellen liegenden Einschaltzeitpunkt charakterisiert, zu welchem das zunächst deaktivierte Gerät eingeschaltet wird, wobei der auch als Phasenanschnittswinkel bezeichnete Phasenanschnittwinkel der wenigstens einen Sinushalbwelle in Abhängigkeit von Information eingestellt wird. Somit ist es möglich, Schwankungen der Wechselspannung ohne Messen der jeweiligen Sinushalbwelle zu kompensieren. Mit anderen Worten ermöglicht es diese Ausführungsform, Spannungsschwankungen beispielsweise statistischer Art und solche, die durch den Heißgetränkebereiter selbst verursacht werden, zu kompensieren. Beispielsweise können Schwankungen der elektrischen Wechselspannung, beispielsweise Schwankungen statistischer Art und/oder Schwankungen, die durch den Getränkebereiter selbst verursacht werden, durch eine Ermittlung, das heißt Bestimmung eines Netzinnenwiderstandes des Stromnetzes, einer Netzleerlaufspannung des Stromnetzes und einer bekannten Belastung des Stromnetzes durch den Getränkebereiter, insbesondere durch die elektronische Recheneinrichtung, vorhergesagt und damit für die jeweils darauffolgende, nächste Sinushalbwelle kompensiert werden.

Beispielsweise wird bei dem Verfahren mittels einer Sensoreinrichtung des Getränkebereiters, dessen Sensoreinrichtung beispielsweise der zuvor genannte Spannungssensor ist oder umfasst, wenigstens eine Sensorgröße erfasst, das heißt gemessen, wobei die Sensorgröße beispielsweise die elektrische Wechselspannung, insbesondere Netzspannung, ist oder charakterisiert, und/oder wobei die Sensorgröße das Stromnetz charakterisiert. Beispielsweise ist oder umfasst die Sensorgröße einen Wiederstand, insbesondere einen Netzwiderstand, des Stromnetzes. Dabei ist es beispielsweise vorgesehen, dass die Phasenanschnittwinkel in Abhängigkeit von der erfassten Sensorgröße eingestellt werden.

Beispielsweise ist oder umfasst das zuvor genannte Gerät wenigstens eine oder mehrere, insbesondere elektrische, Heizungen, so dass bspw. das Gerät wenigstens einen oder mehrere elektrische Verbraucher umfasst. Das Gerät ist eine schaltbare Last, wobei dadurch, dass der Regler oder die Steuerung die Information bereitstellt, das Gerät eine bekannte schaltbare Last ist. Insbesondere kann bspw. der Getränkebereiter bei dem Verfahren den Netzinnenwiderstand des Stromnetzes insbesondere während des Zubereitens des Getränkebereiters ermitteln, d.h. bestimmen. Hierzu misst bspw. der Getränkebereiter die Netzspannung wenigstens einmal ohne Belastung und wenigstens einmal mit, insbesondere bekannter, Last, d.h. unter Belastung. In Abhängigkeit von einer Netzleerlaufspannung des Stromnetzes und in Abhängigkeit von dem Netzinnenwiderstand und in Abhängigkeit von der Funktion kann bei der Phasenanschnittsteuerung der wenigstens eine Phasenanschnittwinkel vorhersagbar oder vorhersagend eingestellt und somit kompensiert werden, wodurch bspw. Schwankungen vorhersagbar für die als kommende Sinushalbwelle kompensiert werden können.

Beispielsweise ist oder beinhaltet die zuvor genannte Funktion u(t), sodass bspw. die zuvor genannte Funktion $u^2(t)$ beinhalten oder sein kann. Hierdurch kann das Getränk besonders vorteilhaft zubereitet werden.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:

Fig. 1    eine schematische Darstellung eines Getränkebereiters zum Zubereiten von Getränken; und

Fig. 2    mehrere schematische Längsschnittansichten einer Pumpe des Getränkebereiters.

In den Figuren sind gleiche oder funktionsgleiche Elemente mit gleichen Bezugszeichen versehen

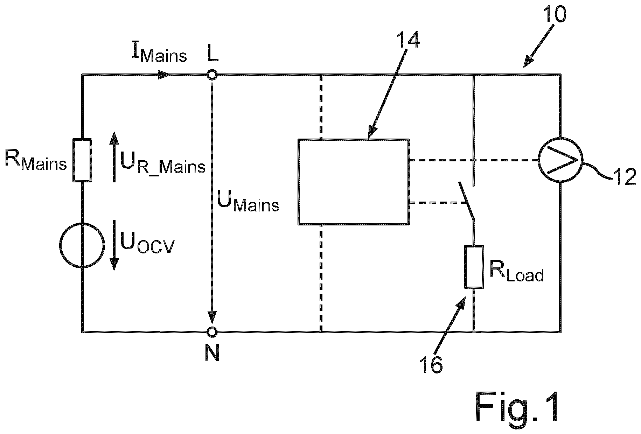

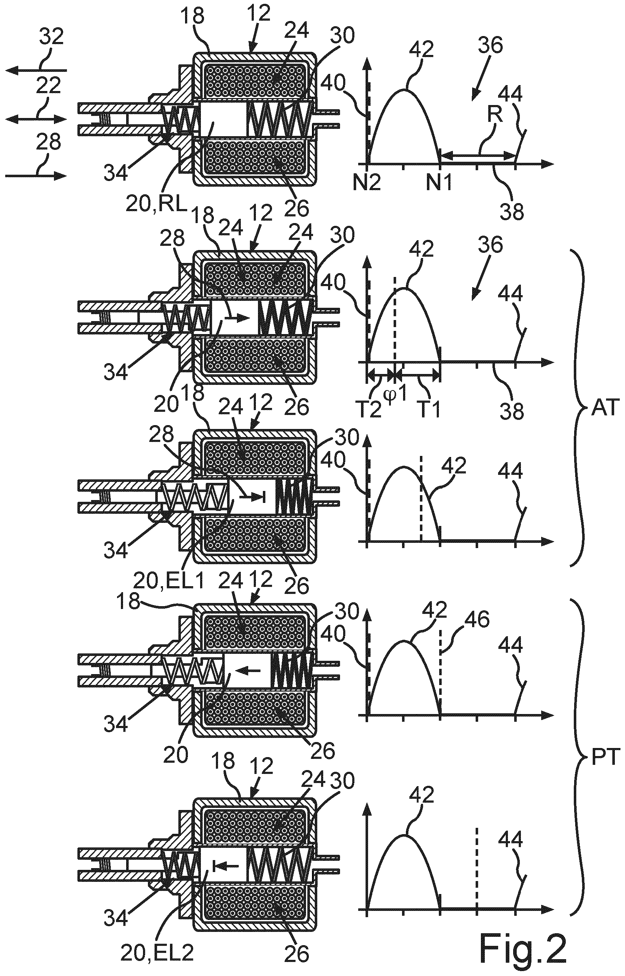

Fig. 1 zeigt in einer schematischen Darstellung einen Getränkebereiter 10. Anhand von Fig. 1 und 2 wird im Folgenden ein Verfahren zum Betreiben des Getränkebereiters 10 beschrieben. Bei dem Verfahren wird mittels des Getränkebereiters 10 ein Getränk zubereitet. Beispielsweise ist der Getränkebereiter 10 ein Heißgetränkebereiter, sodass das Getränk bspw. ein Heißgetränk ist. Ganz insbesondere kann es sich bei dem Heißgetränkebereiter um eine Kaffeemaschine handeln, sodass das Heißgerät ein Kaffeegetränk ist. Der Getränkebereiter 10 weist eine Pumpe 12 auf, welche ganz vorzugsweise als eine Schwingkolbenpumpe ausgebildet ist. Zum Zubereiten des Getränks wird die Pumpe 12 des Getränkebereiters 10 mittels einer elektronischen Recheneinrichtung 14 des Getränkebereiters 10 angesteuert und dadurch betrieben, wodurch mittels der Pumpe 12 Wasser zum Zubereiten des Getränks gefördert wird. Während des Zubereitens des Getränks liegt an dem Getränkebereiter 10 eine elektrische Netzspannung an, welche auch als Versorgungsspannung $U_{Mains}$ bezeichnet wird. Mittels der elektrischen Netzspannung (Versorgungsspannung $U_{Mains}$) wird der Getränkebereiter 10, insbesondere die Pumpe 12, während des Zubereitens des Getränks betrieben, um mittels des Getränkebereiters 10 das Getränk zuzubereiten, insbesondere um mittels der Pumpe 12 das Wasser zum Zubereiten des Getränks zu fördern. Die elektrische Versorgungsspannung wird bei dem in Fig. 1 und 2 gezeigten Ausführungsbeispiel von einem bezüglich des Getränkebereiters 10 externen elektrischen Stromnetz bereitgestellt, dessen einfach auch als Innenwiederstand bezeichnende Netzinnenwiderstand mit $R_{Mains}$ bezeichnet wird. Eine an den oder über den Netzinnenwiderstand elektrisch abfallende Spannung ist in Fig. 1 mit $U_{R\_Mains}$ bezeichnet, und eine einfach auch als Leerlaufspannung bezeichnende Netz Leerlaufnetz des Stromnetzes ist in Fig. 1 mit Uocv bezeichnet. Durch das Anlegen der Netzspannung an den Getränkebereiter 10 kann der Getränkebereiter 10 mit einem als Wechselstrom ausgebildeten, auch als Netzstrom bezeichneten elektrischen Strom $I_{Mains}$ versorgt werden, der von dem Stromnetz bereitgestellt wird.

Der Getränkebereiter 10 kann wenigstens eine auch als Gerät bezeichnete, zusätzlich zu der Pumpe 12 vorgesehene Einrichtung 16 aufweisen, deren elektrischer Widerstand auch mit $R_{Load(s)}$ bezeichnet ist. Hierdurch ist veranschaulicht, dass die Einrichtung 16 eine schaltbare oder zuschaltbare Last ist. Dies bedeutet, dass bspw. während eines ersten Teils des Zubereitens des Getränks, wobei während des ersten Teils mittels der Pumpe 12 das Wasser gefördert wird, die Einrichtung 16, insbesondere durchgehend und somit unterbrechungsfrei, deaktiviert, d.h. abgeschaltet ist, wobei bspw. während eines zweiten Teils des Zubereitens des Getränks, wobei bspw. während des zweiten Teils mittels der Pumpe 12 das Wasser gefördert wird, die Einrichtung 16 aktiviert, d.h. zugeschaltet ist, sodass bspw. während des zweiten Teils die Einrichtung 16, insbesondere durchgängig, betrieben wird. Somit wird bei einem Übergang von dem ersten Teil zu dem zweiten Teil die zunächst deaktivierte, d.h. abgeschaltete Einrichtung 16 zugeschaltet.

Um zum Zubereiten des Getränks mittels der Pumpe 12 das Wasser zu fördern, wird die Pumpe 12, wie im Folgenden noch genau erläutert wird, mit einer auch als Pumpenspannung bezeichneten, elektrischen Wechselspannung versorgt. Wenn im Folgenden die Rede von der elektrischen Wechselspannung ist, so ist darunter, falls nichts anderes angegeben ist, die Pumpenspannung zu verstehen. Mit anderen Worten wird die elektrische Wechselspannung (Pumpenspannung) an die Pumpe 12 angelegt. Die elektrische Wechselspannung (Pumpenspannung) ist bspw. die Netzspannung, oder die elektrische Wechselspannung (Pumpenspannung) resultiert bspw. aus der Netzspannung. Das zuvor beschriebene Zuschalten der zunächst deaktivierten Einrichtung 16 kann zu Schwankungen der elektrischen Wechselspannung (Pumpenspannung) führen. Ferner kann die Netzspannung selbst schwanken, was insbesondere dann, wenn die elektrische Wechselspannung die Netzspannung ist, Schwankungen der elektrischen Wechselspannung bedeutet oder was insbesondere dann, wenn die elektrische Wechselspannung aus der Netzspannung resultiert, zu Schwankungen der elektrischen Wechselspannung (Pumpenspannung) führt. Wie im Folgenden noch genau erläutert wird, können mittels des Verfahrens solche Schwankungen der elektrischen Wechselspannung kompensiert werden. Hierfür wird die bspw. als Schwingkolbenpumpe ausgebildete Pumpe 12 bei dem Verfahren mittels einer Phasenanschnittsteuerung angesteuert, welche mittels der elektronischen Recheneinrichtung 14 durchgeführt wird. Bei der Phasenanschnittsteuerung wird wenigstens eine Spule der Pumpe 12 mit Teilen von Sinushalbwellen der elektrischen Wechselspannung, welche die Netzspannung ist oder aus der Netzspannung resultiert, derart versorgt, dass die Versorgung der Spule mit dem jeweiligen Teil der jeweiligen, auch als jeweilige Netzhalbwelle oder jeweilige Halbwelle bezeichneten Sinushalbwelle bei einem jeweiligen, auch als Einschaltwinkel bezeichneten Phasenanschnittwinkel der jeweiligen Sinushalbwelle beginnt und bei einem jeweiligen, unmittelbar auf den jeweiligen Phasenanschnittwinkel folgenden, mithin zu dem jeweiligen Phasenanschnittwinkel benachbarten, ersten Nulldurchgang der jeweiligen Sinushalbwelle endet.

Fig. 2 zeigt mehrere schematische Längsschnittansichten der Pumpe 12. Die Pumpe 12 ist als Schwingkolbenpumpe ausgebildet und weist ein Gehäuse 18 sowie ein Förderelement 20 auf, welches vorliegend als ein Kolben ausgebildet ist. Das Förderelement 20 (der Kolben) der Pumpe 12 ist entlang einer durch einen Doppelpfeil 22 veranschaulichten und gerade, d.h. entlang einer geraden verlaufenden Bewegungsrichtung relativ zu dem Gehäuse bewegbar, und zwar hin und her bewegbar. Die Spule der Pumpe 12 ist in Fig. 2 mit 24 bezeichnet und Bestandteil eines Elektromagneten 26, der durch Versorgen der Spule 24 mit dem jeweiligen Teil der jeweiligen Sinushalbwelle aktiviert wird. Dies bedeutet, dass der Elektromagnet 26 während einer Zeitspanne, während welcher die Spule 24 mit dem jeweiligen Teil der jeweiligen Sinushalbwelle, insbesondere durchgängig, das heißt unterbrechungsfrei versorgt wird, insbesondere durchgängig aktiviert ist. Unterbleibt ein Versorgen der Spule 24 mit der elektrischen Wechselspannung, so unterbleibt ein Bestromen der Spule 24, sodass die Spule 24 unbestromt ist. Während die Spule 24 unbestromt ist, ist auch der Elektromagnet 26 unbestromt und somit, insbesondere durchgängig, deaktiviert.

Ist der Elektromagnet 26 aktiviert, d.h. wird die Spule 24 bestromt, d.h. mit dem jeweiligen Teil jeweiligen Sinushalbwelle versorgt, so stellt der Elektromagnet 26 bzw. die Spule 24 ein Magnetfeld, d.h. eine magnetische Kraft bereit, mittels welcher das Förderelement 20 in eine mit der Bewegungsrichtung zusammenfallende oder parallel zur Bewegungsrichtung verlaufende, durch einen Pfeil 28 veranschaulichte, erste Richtung relativ zu dem Gehäuse 18, insbesondere translatorisch und ganz besonders rein translatorisch, bewegt wird. Die Pumpe 12 umfasst außerdem wenigstens ein Federelement 30, wobei das Förderelement 20 entlang der Bewegungsrichtung, insbesondere in die erste Richtung, über das Federelement 30 an dem Gehäuse 18 abstützbar oder abgestützt ist. Wird das Förderelement 20 in die erste Richtung relativ zu dem Gehäuse 18 bewegt, so wird hierdurch das insbesondere entlang der Bewegungsrichtung zwischen Förderelement 20 und dem Gehäuse 18 angeordnete Federelement 30 gespannt, wobei durch das Spannen des Federelements 30 das Federelement 30 eine Federkraft bereitstellt. Endet insbesondere nach einem jeweiligen Spannen des Federelements 30 die Bestromung der Spule 24, sodass der Elektromagnet 26 die magnetische Kraft nicht (mehr) bereitstellt, so kann sich das Federelement 30 zumindest teilweise entspannen, wodurch das Federelement 30, das heißt die Federkraft das Förderelement 20 relativ zu dem Gehäuse 18, insbesondere translatorisch und ganz besonders rein transitorisch, in eine durch einen Pfeil 32 veranschaulichte, zweite Richtung bewegt, wobei die zweite Richtung der ersten Richtung entgegengesetzt ist. Die zweite Richtung fällt mit der Bewegungsrichtung zusammen oder verläuft parallel zur Bewegungsrichtung.

Aus Fig. 2 ist erkennbar, dass durch das Förderelement 20 eine auch als Pumpenkammer oder Pumpkammer bezeichnete Förderkammer 34 teilweise und dabei bspw. direkt begrenzt ist. Das Bewegen des Förderelements 20 in die erste Richtung geht mit einer Volumenvergrößerung der Förderkammer 34 einher, wodurch das zuvor genannte Wasser in die Förderkammer 34 hineingefördert, insbesondere hineingesaugt, wird. Das Bewegen des Förderelements 20 in die geht mit einer Volumenverkleinerung der Förderkammer 34 einher, wodurch das zuvor in die Förderkammer 34 hineingeförderte Wasser aus der Förderkammer 34 herausgefördert wird. Somit wird durch abwechselndes Bewegen des Förderelements 20 in die erste Richtung und in die zweite Richtung das Wasser insbesondere pulsierend gefördert.

Fig. 2 zeigt auch Diagramme 36, auf deren jeweilige Abszisse 38 die Zeit aufgetragen ist. Auf der jeweiligen Ordinate 40 des jeweiligen Diagramms 36 ist die elektrische Wechselspannung aufgetragen.

Die elektrische Wechselspannung umfasst erste Sinushalbwellen und zweite Sinushalbwellen, wobei die ersten Sinushalbwellen und die zweiten Sinushalbwellen abwechselnd aufeinander folgend. Die zuvor genannten Sinushalbwellen sind die ersten Sinushalbwellen, sodass wenn zuvor und im Folgenden die Rede den Sinushalbwellen ist, darunter, falls nichts anderes angegeben ist, die ersten Sinushalbwellen zu verstehen sind. Somit sind die zuvor genannten Teile der Sinushalbwellen Teile der ersten Sinushalbwellen. Beispielsweise wird die Pumpe 12 über eine Diode mit der elektrischen Wechselspannung versorgt, derart, dass die Diode nur jede zweite der Sinushalbwellen der Wechselspannung durchlässt, mithin die zweiten Sinushalbwellen der elektrischen Wechselspannung ausblendet und in der Folge bezogen auf die ersten Sinushalbwellen und die zweiten Sinushalbwellen nur die ersten Sinushalbwellen zu der Pumpe 12, d.h. zu der Spule 24 durchlässt. Eine der ersten Sinushalbwellen ist in Fig. 2 erkennbar und mit 42 bezeichnet und teilweise in Fig. 2 erkennbar ist auch eine mit 44 bezeichnete, andere der ersten Sinushalbwellen, wobei, wie aus Fig. 2 erkennbar ist, die Sinushalbwellen 42 und 44 benachbart zueinander sind. Dies bedeutet, dass zwischen den Sinushalbwellen 42 und 44 keine andere Sinushalbwelle der elektrischen Wechselspannung liegt. Würde die Diode die zweiten Sinushalbwellen nicht ausblenden, würde zwischen den Sinushalbwellen 42 und 44, insbesondere genau, eine der zweiten Sinushalbwellen und dabei keine der ersten Sinushalbwellen liegen. Da jedoch die Dioden die zweiten Sinushalbwellen ausblendet und nur die ersten Sinushalbwellen zu der Pumpe 12, d.h. zu der Spule 24 durchlässt, liegt zwischen den zueinander benachbarten Sinushalbwellen 42 und 44 eine Ruhephase R, während welcher eine Versorgung der Spule 24 bzw. der Pumpe 12 mit der elektrischen Wechselspannung, insbesondere unterbrechungsfrei, d.h. durchgängig, unterbleibt, sodass während der Ruhephase R ein Bestromen der Spule 24, insbesondere durchgängig und somit unterbrechungsfrei, unterbleibt. Somit kann sich während der Ruhephase R das Federelement 30 jeweils zumindest teilweise entspannen und dadurch den Kolben jeweils in die zweite Richtung bewegen.

In Fig. 2 ist der erste Nulldurchgang der Sinushalbwelle 42 mit N1 bezeichnet. Dabei weist die jeweilige Sinushalbwelle und somit auch die Sinushalbwelle 42 genau zwei jeweilige Nulldurchgänge auf, nämlich den jeweiligen, ersten Nulldurchgang N1 und einen jeweiligen, zweiten Nulldurchgang, wobei die jeweiligen Nulldurchgänge der jeweiligen Sinushalbwelle zueinander benachbart sind, das heißt unmittelbar aufeinanderfolgen. Dies bedeutet, dass zwischen den jeweiligen Nulldurchgängen der jeweiligen Sinushalbwelle kein anderer, weiterer Nulldurchgang der jeweiligen Sinushalbwelle liegt. In Fig. 2 ist der zweite Nulldurchgang der Sinushalbwelle 42 mit N2 bezeichnet.

In Fig. 1 ist eine Ruhelage des Förderelements 20 mit RL bezeichnet. In der Ruhelage bewegt sich das Förderelement 20 nicht entlang der Bewegungsrichtung relativ zu dem Gehäuse 18, sodass in der Ruhelage RL ein Fördern des Wassers mittels der Pumpe 12 unterbleibt. Der jeweilige, zuvor genannte Teil der jeweiligen Sinushalbwelle wird auch als jeweiliger erster Teil der jeweiligen Sinushalbwelle bezeichnet, wobei der erste Teil der Sinushalbwelle 42 mit T1 bezeichnet ist. Dabei wird der jeweiligen Phasenanschnittwinkel auch mit $\varphi$ bezeichnet, wobei der Phasenanschnittwinkel der Sinushalbwelle 42 mit $\varphi 1$ bezeichnet ist. Es ist erkennbar, dass der Phasenanschnittwinkel $\varphi 1$ der Sinushalbwelle 42 zwischen den Nulldurchgängen N1 und N2 der Sinushalbwelle 42 liegt. Ein insbesondere dem ersten Teil T1 der Sinushalbwelle 42 zeitlich vorweggehender, zweiter Teil der Sinushalbwelle 42 ist mit T2 bezeichnet, wobei insbesondere jede Sinushalbwelle einen jeweiligen solchen, dem jeweiligen, ersten Teil der jeweiligen Sinushalbwelle vorweggehenden, zweiten Teil aufweist. Der zweite Teil T2 erstreckt sich von dem Nulldurchgang N2 bis zum Phasenanschnittwinkel $\Phi 1$. Wie zuvor ausgeführt, wird die Spule 24 erst ab dem Phasenanschnittwinkel $\Phi 1$ und bis zu dem Nulldurchgang N1 mit der Sinushalbwelle 42 und somit mit dem ersten Teil T1 versorgt, sodass die Spule 24 nicht mit dem zweiten Teil T2 der Sinushalbwelle 42 versorgt wird. Dies bedeutet, dass während des zweiten Teils T2 der Sinushalbwelle 42 ein Versorgen der Spule 24 mit der Sinushalbwelle 42 und somit mit der elektrischen Spannung insgesamt, insbesondere durchgängig, unterbleibt. Insbesondere können die elektrische Wechselspannung und ein elektrischer Wechselstrom synonym verstanden werden, mit welchem die Pumpe 12, insbesondere die Spule 24, versorgt wird, dadurch, dass die elektrische Wechselspannung an der Pumpe 12, d.h. an der Spule 24 anliegt, um hierdurch mittels der Pumpe 12 das Wasser zu fördern. Dabei ist beispielsweise der elektrische Wechselstrom der Netzstrom $I_{Mains}$, oder der elektrische Wechselstrom resultiert aus dem Netzstrom $I_{Mains}$. Da ab dem Phasenanschnittwinkel Φ1 und bis zu dem Nulldurchgang N1 die Spule 24 mit der Sinushalbwelle 42 und mit dem Teil T1 versorgt wird, beginnt ab dem Phasenanschnittwinkel Φ1 ein auch als Ansaugen oder Ansaugphase bezeichneter Ansaugakt der Pumpe 12, die bei ihrem oder während ihres Andocktakts mittels des Förderelements 20 das Wasser in die Förderkammer 34 hineinfördert und somit hineinsaugt. Somit wird das Förderelement 20 während des Ansaugakt in die erste Richtung bewegt. Der Ansaugakt ist in Fig. 2 mit AT bezeichnet, wobei in Fig. 2 Teile des Ansaugakt AT gezeigt sind. Durch das Bestromen der Spule 24 und somit mittels der magnetischen Kraft wird der Kolben (Förderelement 20) aus der Ruhephase R so lange in die erste Richtung bewegt, bis der Kolben seine in Fig. 2 seine mit EL1 bezeichnete, erste Endlage erreicht hat, wobei der Kolben seine Endlage EL1 vor dem Nulldurchgang N1 erreichen kann. Da sich einem Nulldurchgang N1 die Ruhephase R anschließt, während welcher die Spule 24 nicht bestromt wird und somit der Elektromagnet 26 die magnetische Kraft nicht bereitstellt, kann sich während der Ruhephase R das Federelement 30 entspannen, wodurch das Federelement 30 den Kolben in die zweite Richtung relativ zu dem Gehäuse 18 bewegt, insbesondere drückt, insbesondere aus der ersten Endlage EL1 und ganz insbesondere so lange, bis der Kolben seine mit EL2 bezeichnete, zweite Endlage erreicht. Der Kolben kann die Endlage EL2 vor dem Phasenanschnittwinkel der auch die Sinushalbwelle 42 folgende Sinushalbwelle 44, insbesondere vor dem Nulldurchgang N2 der Sinushalbwelle 44, erreichen. Somit erfolgt in der Ruhephase R ein auch als Pumpen oder Pumpenphase bezeichneter Pumpentakt PT der Pumpe 12, die in dem Pumpentakt PT mittels des Kolbens das Wasser aus der Förderkammer 34 herausfördert, dadurch, dass in dem Pumpentakt PT mittels des sich entspannenden Federelements 30 der Kolben (Förderelement 20) relativ zu dem Gehäuse 18 in die zweite Richtung (Pfeil 32) bewegt. In Fig. 2 sind zwei Teile des Pumpenteils PT dargestellt. Die zweite Endlage EL2 kann in der Ruhelage RL entsprechen, oder die Endlage EL2 ist eine von der Ruhelage RL unterschiedliche Lage des Kolbens, wobei es beispielsweise dann, wenn nach dem Fördern des Wassers mittels der Pumpe der Getränkebereiter 10 abgeschaltet wird, der Kolben insbesondere aus der Endlage EL2 oder aus der EL1 in die Ruhelage RL zurückkehrt. In Fig. 2 veranschaulicht beispielsweise eine gestrichelte Linie 46 einen zeitlichen Ablauf des mittels der Pumpe 12 bewirkten Förderns des Wassers.

Bei dem Verfahren ist es auch vorgesehen, dass während des Zubereitens des Getränks, insbesondere während des Förderns des Wassers mittels der Pumpe 12, die Phasenanschnittwinkel φ mittels der elektronischen Recheneinrichtung 14 derart eingestellt, das heißt ausgewählt, insbesondere variiert, werden, dass, insbesondere alle, Werte von von den eingestellten Phasenanschnittwinkeln φ abhängenden Integralen der gleichen, von einem zeitlichen Verlauf der während des Zubereitens des Getränks an dem Getränkebereiter 10 anliegenden elektrischen Netzspannung abhängen oder den zeitlichen Verlauf der während des Zubereitens des Getränks an dem Getränkebereiter 10 anliegenden Netzspannung beschreibenden Funktion während des Zubereitens des Getränks gleich sind. Mit anderen Worten werden die Phasenanschnittwinkel φ derart eingestellt, insbesondere variiert, dass das Integral der Funktion während des Zubereitens des Getränks konstant ist. Dabei hängen die Integrale derart von den Phasenanschnittwinkeln φ ab, dass dem jeweiligen Phasenanschnittwinkel g φ enau ein jeweiliges der Integrale derart zugeordnet ist, dass der jeweilige Phasenanschnittwinkel φ ein jeweiliger Anfang des dem jeweiligen Phasenanschnittwinkel zugeordneten Integrals ist, dessen Ende der jeweilige erste Nulldurchgang N1 der jeweiligen Sinushalbwelle ist. Beispielsweise ist oder beinhaltet die Funktion u(t), sodass beispielsweise die Funktion $u^2(t)$ beinhalten oder sein kann. Dabei ist mit u die Netzspannung bezeichnet, und t bezeichnet die Zeit.

Mit anderen Worten ist es bei dem Verfahren vorgesehen, dass während des Zubereitens des Getränks die Phasenanschnittwinkel φ derart eingestellt werden, dass das von on den eingestellten Phasenanschnittwinkeln φ abhängende Integral der von dem zeitlichen Verlauf der während des Zubereitens des Getränks an dem Getränkebereiter 10 anliegenden elektrischen Netzspannung abhängenden oder den zeitlichen Verlauf der während des Zubereitens des Getränks an dem Getränkebereiter 10 anliegenden elektrischen Netzspannung beschreibenden Funktion während des Zubereitens des Getränks konstant ist, wobei das Integral derart von den Phasenanschnittwinkeln φ abhängt, dass das Integral bei dem jeweiligen Phasenanschnittwinkel φ des jeweiligen Sinushalbwelle beginnt und insbesondere bei dem jeweiligen, unmittelbar auf den jeweiligen Phasenanschnittwinkel φ der jeweiligen Sinushalbwelle folgenden Nulldurchgang N1 der jeweiligen Sinushalbwelle endet.

Wird also für den jeweiligen, insbesondere jeden, eingestellten Phasenanschnittwinkel φ ein jeweiliger Berechnungsvorgang durchgeführt, durch welchen für den jeweiligen, insbesondere jeden, eingestellten Phasenanschnittwinkel φ das Integral jeweils berechnet wird, derart, dass der jeweilige Phasenanschnittwinkel φ der jeweiligen Sinushalbwelle als ein jeweiliger Anfang des Integrals und der jeweilige, unmittelbar auf den jeweiligen Phasenanschnittwinkel φ der

jeweiligen Sinushalbwelle folgende erste Nulldurchgang N1 der jeweiligen Sinushalbwelle als ein jeweiliges Ende des Integrals verwendet wird, so ist das Integral konstant, wobei der jeweilige Berechnungsvorgang bei dem Verfahren durchgeführt werden kann, jedoch nicht notwendigerweise durchgeführt muss. Die Nennung und Beschreiung des Berechnungsvorgangs dient vor allem dazu, das Verfahren und Zusammenhänge zwischen dem Integral, der Funktion und den Phasenanschnittwinkeln zu erläutern. Unter den zuvor genannten Integralen ist somit zu verstehen, das heißt die vorige Verwendung des Pluralworts "Integrale" im Hinblick auf die Werte der Integrale ist somit so zu verstehen, dass in dem oder durch den jeweiligen Berechnungsvorgang jeweils das Integral verwendet und berechnet wird, und da je Phasenanschnittwinkel ein Berechnungsvorgang durchgeführt wird, werden mehrere Berechnungsvorgänge durchgeführt, wobei das jeweilige, in dem jeweiligen Berechnungsvorgang verwendete Integral als ein jeweiliges, eigenes oder einzelnes Integral angesehen werden kann, sodass sozusagen die mehreren Integrale und somit deren Werte berechnet werden.

Dadurch, dass bei dem Verfahren das Integral konstant gehalten wird, kann beispielsweise eine Größe wie ein Durchfluss des Wassers und/oder einen Druck des Wassers trotz der zuvor genannten Schwankungen der Netzspannung beziehungsweise der elektrischen Spannung zumindest im Wesentlichen gehalten werden, sodass das Getränk besonders vorteilhaft zubereitet werden kann.

Um das Getränk besonders vorteilhaft zubereiten zu können, ist es beispielsweise vorgesehen, dass die Pumpe 12 während des Zubereitens des Getränks mittels einer Regelung betrieben und dadurch geregelt betrieben wird, wobei die Regelung mittels der elektronischen Recheneinrichtung 14 durchgeführt wird. Dabei umfasst das Einstellen der Phasenanschnittwinkel, dass die Regelung während des Zubereitens Soll-Werte für die Phasenanschnittwinkel, das heißt insbesondere für den jeweiligen Phasenanschnittwinkel genaue einen jeweiligen Soll-Wert bereitstellt und somit beispielsweise vorgibt. Dabei können sich zwei oder demgegenüber mehr der Soll-Werte voneinander unterscheiden. Mittels der elektronischen Recheneinrichtung 14 wird zu dem jeweiligen Soll-Wert, das heißt insbesondere zu jedem Soll-Wert, insbesondere genau, ein jeweiliger korrespondierender Ist-Wert für den jeweiligen Phasenanschnittwinkel erzeugt. Mittels der elektronischen Recheneinrichtung 14 werden die Ist-Werte und dadurch Phasenanschnittwinkel eingestellt, wobei die Ist-Werte derart erzeugt werden, dass sich zumindest einer der Ist-Werte von dem korrespondierenden Soll-Wert, zu welchem der zumindest eine Ist-Wert erzeugt wurde, unterscheidet. Somit wird der Soll-Wert, zu welchem der zumindest eine Ist-Wert erzeugt wurde, zu dem zumindest einen Ist-Wert geändert, das heißt korrigiert oder kompensiert, wodurch die zuvor genannten Schwankungen vorteilhaft kompensiert werden können. Wieder mit anderen Worten ausgedrückt ist der zumindest eine Ist-Wert eine Kompensation oder ein Kompensationswert zum Kompensieren des von der Regelung vorgegebenen SollWerts, zu welchem der zumindest eine Ist-Wert erzeugt wurde. Durch Einstellen der Ist-Werte und dadurch der Phasenanschnittwinkel sind die Werte der Integrale während des Zubereitens des Getränks gleich, und somit ist das Integral konstant.

Dem Verfahren liegen insbesondere die folgenden Gleichungen zugrunde:

$$U_{area,nominal} = \int_{\varphi}^{180°} u(t) * dt$$

$$U_{area,nominal} = \widehat{U_{Mains,nominal}} * (1 + \cos(\varphi))$$

$$U_{area,nominal} = U_{area,real}$$

$$\widehat{U_{Mains,nominal}} * (1 + \cos(\varphi_{should})) = \widehat{U_{Mains,real}} * (1 + \cos(\varphi_{comp}))$$

$$\varphi_{comp} = \cos^{-1}\left[\frac{\widehat{U_{Mains,nominal}}}{\widehat{U_{Mains,real}}} * (1 + \cos\varphi_{should}) - 1\right]$$

$$\rightarrow \varphi_{comp} = f\left(\widehat{U_{Mains,real}}, \varphi_{should}\right)$$

Mit U ist eine jeweilige elektrische Spannung bezeichnet, wobei sich der jeweilige Index "area" auf die an der Pumpe anliegende elektrische Wechselspannung bezieht beziehungsweise die an der Pumpe anliegende elektrische Wechselspannung meint. Der Index "nominal" meint eine Nominalgröße in Bezug auf diese Spannung eine Nominalspannung, die insbesondere bezogen auf die Netzspannung 230 V beträgt. Der Index "real" meint eine tatsächliche Größe und damit bezogen auf die Netzspannung die tatsächliche Netzspannung, die gegenüber der Nominalspannung von 230 V schwanken und somit zeitweise über der Nominalspannung von 230 V und/oder unteren Nominalspannung von 230 V liegen kann. Bezogen auf die elektrische Wechselspannung meint der Index "real" somit die tatsächliche an der Pumpe 12 beziehungsweise Spule 24 anliegende elektrische Wechselspannung, die aufgrund der Spannung der Netzspannung schwankend und bezogen auf die Nominalspannung von 230 V zeitweise über der Nominalspannung von 230 V und/oder unter der Nominalspannung von 230 V liegen kann. Mit $\varphi_{should}$ ist der jeweilige, von der Regelung bereitgestellte und somit vorgegebene Soll-Wert zu verstehen, wobei mit $\varphi_{comp}$ der jeweilige Ist-Wert bezeichnet ist. Erkennbar ist, dass der jeweilige Ist-Wert von der tatsächlichen an dem Getränkebereiter 10 anliegenden Netzspannung und von dem jeweiligen, korrespondierenden Soll-Wert abhängt und wie oben angegeben mittels der elektronischen Recheneinrichtung 14 ermittelt, insbesondere berechnet, und somit erzeugt werden kann. Insbesondere ist es beispielsweise vorgesehen, dass der Getränkebereiter 10 eine Sensoreinrichtung aufweist, mittels welcher beispielsweise die insbesondere tatsächliche, anliegende Netzspannung und/oder der Netzinnenwiderstand gemessen werden, sodass beispielsweise mittels der elektronischen Recheneinrichtung 14 zu dem jeweiligen Soll-Wert der jeweilige Ist-Wert in Abhängigkeit von der mittels der Sensoreinrichtung gemessenen Nutzspannung und/oder in Abhängigkeit von dem mittels der Sensoreinrichtung gemessenen Netzinnenwiderstand erzeugt, insbesondere berechnet und dadurch erzeugt, wird.

Dem Verfahren liegen beispielsweise auch folgende Formeln zugrunde:

$$R_{Mains} = R_{Load(s)} * \left( \frac{U_{Mains\_wo}}{U_{Mains\_w}} - 1 \right)$$

$$U_{Mains\_w} = \frac{U_{Mains\_wo}}{\dfrac{R_{Mains} * P_{load,nominal}}{U_{Mains,nominal}^2} + 1}$$

$$\varphi_{comp} = f\left( \widehat{U_{Mains,real}}, \varphi_{should} \right)$$

Mit $U_{Mains\_wo}$ ist die mit Leerlaufspannung bezeichnet, die die Netzspannung ohne Last ist, und mit $U_{Mains\_w}$ ist die Netzspannung mit Last bezeichnet. Mit $P_{load}$ ist die zuzuschaltende Last, mithin die Einrichtung 16 bezeichnet, sodass mit $P_{load,nominal}$ eine Nominalleistung der Einrichtung 16 bezeichnet ist.

## Patentansprüche

1. Verfahren zum Betreiben eines Getränkebereiters (10), bei welchem zum Zubereiten eines Getränks eine Pumpe (12) des Getränkebereiters (10) angesteuert und dadurch betrieben wird, wodurch mittels der Pumpe (12) Wasser zum Zubereiten des Getränks gefördert wird, wobei während des Zubereitens des Getränks an dem Getränkebereiter (10) eine elektrische Netzspannung anliegt, mittels welcher der Getränkebereiter (10) während des Zubereitens des Getränks betrieben wird, um mittels des Getränkebereiters (10) das Getränk zuzubereiten,
**dadurch gekennzeichnet, dass**:

- die Pumpe (12) mittels einer Phasenanschnittsteuerung angesteuert wird, bei welcher wenigstens eine Spule (24) der Pumpe (10) zumindest mit Teilen (T1) von Sinushalbwellen (42, 44) einer elektrischen Wechselspannung, welche die Netzspannung ist oder aus der Netzspannung resultiert, derart versorgt wird, dass die Versorgung der Spule (24) mit dem jeweiligen Teil (T1) der jeweiligen Sinushalbwelle (42, 44) bei einem jeweiligen Phasenanschnittwinkel (φ) der jeweiligen Sinushalbwelle (42, 44) beginnt und bei einem jeweiligen, unmittelbar auf den jeweiligen Phasenanschnittwinkel (φ) folgenden Nulldurchgang (N1) der jeweiligen Sinushalbwelle (42, 44) endet; und
- während des Zubereitens des Getränks die Phasenanschnittwinkel (φ) derart eingestellt werden, dass ein von den eingestellten Phasenanschnittwinkeln (φ) abhängendes Integral einer von einem zeitlichen Verlauf der während des Zubereitens des Getränks an dem Getränkebereiter (10) anliegenden elektrischen Netzspannung abhängenden oder den zeitlichen Verlauf der während des Zubereitens des Getränks an dem Getränkebereiter (10) anliegenden elektrischen Netzspannung beschreibenden Funktion während des Zubereitens des Getränks konstant ist, wobei das Integral derart von den Phasenanschnittwinkeln (φ) abhängt, dass das Integral bei dem jeweiligen Phasenanschnittwinkel (φ) beginnt.

2. Verfahren nach Anspruch 1,
**dadurch gekennzeichnet, dass**
die Pumpe (12) während des Zubereitens des Getränks mittels einer Regelung betrieben und dadurch geregelt betrieben wird, wobei das Einstellen der Phasenanschnittwinkel ($\varphi$) umfasst, dass:

- die Regelung während des Zubereitens Soll-Werte für die Phasenanschnittwinkel ($\varphi$) bereitstellt;
- zu dem jeweiligen Soll-Wert ein jeweiliger korrespondierender Ist-Wert für den jeweiligen Phasenanschnittwinkel ($\varphi$) erzeugt wird;
- die Ist-Werte und dadurch die Phasenanschnittwinkel ($\varphi$) eingestellt werden;
- die Ist-Werte derart erzeugt werden, dass:

  o sich zumindest einer der Ist-Werte von dem korrespondierenden Soll-Wert, zu welchem der zumindest eine Ist-Wert erzeugt wurde, unterscheidet; und
  o durch Einstellen der Ist-Werte und dadurch der Phasenanschnittwinkel ($\varphi$) das Integral während des Zubereitens des Getränks konstant ist.

3. Verfahren nach Anspruch 2,
**dadurch gekennzeichnet, dass**
die Regelung eine Messgröße als Regelgröße verwendet, wobei die Messgröße mittels wenigstens eines Sensors des Getränkebereiters (10) gemessen wird.

4. Verfahren nach Anspruch 3,
**dadurch gekennzeichnet, dass**
die Messgröße ein mittels der Pumpe (12) bewirkter Druck des geförderten Wassers oder eine mittels der Pumpe (12) bewirkte Durchflussmenge des geförderten Wassers ist.

5. Verfahren nach einem vorhergehenden Ansprüche,
**dadurch gekennzeichnet, dass**
während des Zubereitens des Getränks für den jeweiligen eingestellten Phasenanschnittwinkel ($\varphi$) das Integral berechnet wird.

6. Verfahren nach einem vorhergehenden Ansprüche,
**dadurch gekennzeichnet, dass**
ein jeweiliger Wert des jeweiligen Integrals ein jeweiliger Flächeninhalt einer jeweiligen Fläche ist, die unter dem jeweiligen Teil (T1) der jeweiligen Sinushalbwelle (42, 44) und zwischen dem jeweiligen Phasenanschnittwinkel ($\varphi$) und dem jeweiligen, unmittelbar auf den jeweiligen Phasenanschnittwinkel ($\varphi$) folgenden Nulldurchgang (N1) der jeweiligen Sinushalbwelle (42, 44) liegt.

7. Verfahren nach einem der vorhergehenden Ansprüche,
**dadurch gekennzeichnet, dass**
ein jeweiliger, vor dem jeweiligen Phasenanschnittwinkel ($\varphi$) der jeweiligen Sinushalbwelle (42, 44) liegender zweiter Teil (T2) der jeweiligen Sinushalbwelle (42, 44) mittels eines Spannungssensors des Getränkebereiters (10) gemessen wird, wobei zum Einstellen der Phasenanschnittwinkel ($\varphi$) der jeweilige, auf den jeweiligen zweiten Teil (T2) der jeweiligen Sinushalbwelle (42, 44) folgende Phasenanschnittwinkel ($\varphi$) der jeweiligen Sinushalbwelle (42, 44) in Abhängigkeit von dem Messen des jeweiligen, vor dem jeweiligen Phasenanschnittwinkel ($\varphi$) der jeweiligen Sinushalbwelle (42, 44) liegenden zweiten Teil (T2) der jeweiligen Sinushalbwelle (42, 44) eingestellt wird.

8. Verfahren nach einem der vorhergehenden Ansprüche,
**dadurch gekennzeichnet, dass**
wenigstens ein zum Regeln wenigstens eines zusätzlich zu der Pumpe (12) vorgesehenen und elektrisch betreibbaren Geräts (16) des Getränkebereiters (10) vorgesehener Regler des Getränkebereiters (10) oder eine zum Steuern des zusätzlich zu der Pumpe (12) vorgesehenen Geräts (16) vorgesehene Steuerung des Getränkebereiters (10) eine Information bereitstellt, die einen innerhalb wenigstens einer der Sinushalbwellen (42, 44) liegenden Einschaltzeitpunkt charakterisiert, zu welchem das zunächst deaktivierte Gerät (16) eingeschaltet wird, wobei der Phasenanschnittwinkel ($\varphi$) der wenigstens einen Sinushalbwelle (42, 44) in Abhängigkeit von der Information eingestellt wird.

9. Verfahren nach Anspruch 8,

**dadurch gekennzeichnet, dass**
der Regler oder die Steuerung die Information zu einem Bereitstellungszeitpunkt bereitstellt, welcher zeitlich vor dem Phasenanschnittwinkel ($\varphi$) der einen Sinushalbwelle (42, 44) liegt.

10. Verfahren nach einem der vorhergehenden Ansprüche,
**dadurch gekennzeichnet, dass**
als die Pumpe (12) eine Schwingkolbenpumpe verwendet wird.

11. Verfahren nach einem der vorhergehenden Ansprüche,
**dadurch gekennzeichnet, dass**
als der Getränkebereiter (10) ein Heißgetränkebereiter, insbesondere eine Kaffeemaschine und ganz insbesondere eine Siebträgermaschine, betrieben wird.

12. Getränkebereiter (10), welcher zum Durchführen eines Verfahrens nach einem der vorhergehenden Ansprüche ausgebildet ist.

Fig.1

Fig.2

Europäisches
Patentamt

European
Patent Office

Office européen
des brevets

# EUROPÄISCHER RECHERCHENBERICHT

**Nummer der Anmeldung**

EP 24 19 9654

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 2 946 702 A1 (QBO COFFEE GMBH [CH]) 25. November 2015 (2015-11-25) * Absatz [0030] - Absatz [0062]; Abbildungen 1-3b * ----- | 1-12 | INV. A47J31/46 A47J31/52 |
| A | EP 2 452 597 A1 (BSH BOSCH SIEMENS HAUSGERAETE [DE]) 16. Mai 2012 (2012-05-16) * Absatz [0015] - Absatz [0026]; Abbildungen 1,2 * ----- | 1-12 | |

**RECHERCHIERTE SACHGEBIETE (IPC)**

A47J

Der vorliegende Recherchenbericht wurde für alle Patentansprüche erstellt

| Recherchenort | Abschlußdatum der Recherche | Prüfer |
|---|---|---|
| München | 19. November 2024 | Vuc, Arianda |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

...............................................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 19 9654

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-11-2024

| Im Recherchenbericht angeführtes Patentdokument | Datum der Veröffentlichung | Mitglied(er) der Patentfamilie | Datum der Veröffentlichung |
|---|---|---|---|
| EP 2946702 A1 | 25-11-2015 | AU 2015263765 A1 | 15-12-2016 |
| | | BR 112016027204 A2 | 15-08-2017 |
| | | CA 2947482 A1 | 26-11-2015 |
| | | CN 106659319 A | 10-05-2017 |
| | | EP 2946702 A1 | 25-11-2015 |
| | | EP 3145373 A1 | 29-03-2017 |
| | | HU E047201 T2 | 28-04-2020 |
| | | JP 6688743 B2 | 28-04-2020 |
| | | JP 2017518809 A | 13-07-2017 |
| | | KR 20170018845 A | 20-02-2017 |
| | | PL 3145373 T3 | 31-03-2020 |
| | | PT 3145373 T | 02-12-2019 |
| | | SG 11201609748S A | 29-12-2016 |
| | | US 2017079463 A1 | 23-03-2017 |
| | | WO 2015176191 A1 | 26-11-2015 |
| EP 2452597 A1 | 16-05-2012 | DE 102010043859 A1 | 16-05-2012 |
| | | EP 2452597 A1 | 16-05-2012 |

EPO FORM P0461

Für nähere Einzelheiten zu diesem Anhang : siehe Amtsblatt des Europäischen Patentamts, Nr.12/82